(19) Europäisches Patentamt
European Patent Office
Office européen des brevets

(11) **EP 4 386 509 B1**

(12) **EUROPÄISCHE PATENTSCHRIFT**

(45) Veröffentlichungstag und Bekanntmachung des Hinweises auf die Patenterteilung:
**30.10.2024 Patentblatt 2024/44**

(21) Anmeldenummer: **22213136.9**

(22) Anmeldetag: **13.12.2022**

(51) Internationale Patentklassifikation (IPC):
**G05D 1/244** (2024.01)   **G05D 1/246** (2024.01)
**G01C 21/20** (2006.01)   G05D 107/70 (2024.01)
**G05D 109/10** (2024.01)

(52) Gemeinsame Patentklassifikation (CPC):
**G01C 21/20; G05D 1/2446; G05D 1/246;**
G05D 2107/70; G05D 2109/10; G05D 2111/10

(54) **VERFAHREN ZUR SELBSTLOKALISATION IN EINER NAVIGATIONSUMGEBUNG UND SELBSTLOKALISIERENDES FAHRZEUG**

METHOD FOR SELF-LOCATION IN A NAVIGATION ENVIRONMENT AND SELF-LOCALIZING VEHICLE

PROCÉDÉ D'AUTOLOCALISATION DANS UN ENVIRONNEMENT DE NAVIGATION ET VÉHICULE AUTO-LOCALISÉ

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**

(43) Veröffentlichungstag der Anmeldung:
**19.06.2024 Patentblatt 2024/25**

(73) Patentinhaber: **SICK AG**
**79183 Waldkirch (DE)**

(72) Erfinder:
• **Hofmann, Dr. Christoph**
**79108 Freiburg (DE)**
• **Arockiaraj, Alfred**
**79106 Freiburg (DE)**

(56) Entgegenhaltungen:
DE-B4- 102019 202 733   US-A1- 2015 371 181
US-A1- 2019 332 096   US-A1- 2021 311 205

EP 4 386 509 B1

**Beschreibung**

Die Erfindung betrifft ein Verfahren zur Selbstlokalisation in einer Navigationsumgebung und ein selbstlokalisierendes Fahrzeug nach dem Oberbegriff von Anspruch 1 beziehungsweise 12.

Eine Voraussetzung für eine erfolgreiche Navigation ist die verlässliche Kenntnis der eigenen Position durch eine Selbstlokalisation. Im Außenbereich (Outdoor) stehen dafür satellitengestützte Verfahren zur Verfügung (GPS, Global Positioning System). Im Innenbereich (Indoor) ohne Empfang der Satellitensignale gibt es alternative Verfahren, die auf einer Vielzahl stationärer Sender in unterschiedlichen Technologien wie Ultraschall, Radar oder auch WLAN beziehungsweise Mobilfunk basieren. In der Regel steht eine dafür ausgelegte Infrastruktur jedoch nicht zur Verfügung. Es existieren weiterhin bildbasierte Verfahren wie SLAM (Simultaneous Localization and Mapping), die recht hochwertige Sensorik und Algorithmik verlangen, vor allem dann, wenn die Fehlerquote klein bleiben soll. Die Navigation vor allem im Innenbereich ist somit eine sehr komplexe Aufgabe, die hohen Aufwand erfordert. Die Schwierigkeiten werden noch größer, wenn eine Anpassung an neue Situationen und Szenarien gefordert wird.

Eine Selbstlokalisierung kann herkömmlich durch künstliche optische Marker unterstützt werden. Beispielsweise ist bekannt, Positionen künstlicher Marker auf einer Karte zu verzeichnen. Weitergehend kann ein Marker mittels optischen Codes seine eigene Position mitteilen. Ergänzend gibt es Verfahren, die die Pose einer den Marker erfassenden Kamera bestimmen. Für letzteres eignen sich besonders sogenannte Passermarken (Fiducial Marker), die ausreichend Merkmale bieten, um die Pose zu rekonstruieren. Im einfachsten Fall sind die Merkmale die vier Ecken des Markers, wobei zusätzliche Robustheit einschließlich der Möglichkeit von Fehlererkennung und Fehlerkorrektur durch weitere innere Merkmale des Markers geschaffen werden kann.

Ein bekanntes Vision-System auf Basis von Fiducial Markern ist AprilTag, s. https://april.eecs.umich.edu/software/apriltag.html einschließlich einer dort angeführten Literaturliste. Es umfasst eine in C implementierte Bibliothek mit Funktionen unter anderem zur Bestimmung von 3D-Position, Orientierung und Identität der Marker. Eine Alternative ist ArUco, mit einem Tutorial unter https://docs.opencv.org/4.x/d5/dae/tutorial_aruco_de-tection.html. Vu-Marks bietet eine weitere Klasse spezieller künstlicher Marker, s. https://library.vuforia.com/objects/vumarks.

Die US 2021/311205 A1 und US 10 223 666 B1 offenbaren ein System zur Navigation mit sich selbst beschreibenden Fiducial Markern, die auf optischem Wege die Navigation unterstützende Informationen einschließlich der eigenen Position des Markers mitteilen. Es besteht ferner die Möglichkeit, auf Basis der Selbstbeschreibung auf eine Datenbank zuzugreifen und so zusätzliche Informationen zu erhalten. Gemäß einer Ausführungsform kann ein sich selbst beschreibender Fiducial Marker die Form einer Reihe von LEDs annehmen.

In der US 10 223 666 B1 wird ein Verfahren zur Verwaltung eines Lagers vorgestellt, in dem sich autonome Fahrzeuge bewegen. Sie orientieren sich anhand von Fiducial Markern, die in einer Referenzkarte verzeichnet sind. Der Wertebereich der Fiducial Marker ist klein, so dass es zunächst zu Mehrdeutigkeiten über die Identität eines erfassten Fiducial Makers kommt. Die Mehrdeutigkeit wird durch zusätzliche Eigenschaften aufgelöst, wie unterschiedliche Farben, Orientierungen oder Größen der Fiducial Markers. Die DE 10 2019 202 733 B4 (D2) offenbart ein Steuergerät zur Navigation eines autonomen Fahrzeugs. Es folgt einer Spur von Markern, insbesondere LEDs, die sich g Gruppen mit jeweils gleichen optischen Eigenschaften zuordnen lassen. Mittels Erfassung von N aufeinanderfolgenden Markern wird aus der Abfolge der optischen Eigenschaften auf eine Position geschlossen.

Zur Bezeichnung eines Ortes sind verschiedene Geokodierungen bekannt, wozu beispielsweise Postanschriften zählen, die sich aber für eine Indoor-Navigation und selbst schon eine Navigation außerhalb von Ortschaften nicht eignen. Eine besondere Geokodierung trägt den Namen What3Words und wird beispielsweise in der WO 2014/170646 A1 beschrieben. Hier werden mit einer Auflösung von etwa 3 Metern jedem Ort drei Wörter eines festen Wörterbuchs zugeordnet. Beispielsweise residiert das europäische Patentamt in München bei ///umfragen.melodram.baum. Es gibt keine offensichtliche Nachvollziehbarkeit der einem Ort zugeordneten drei Wörter und auch keine einfachen Nachbarschaftsbeziehungen. What3Numbers unter https://github.com/hfu/what3num-bers nutzt ein ähnliches Prinzip mit drei Zahlen statt drei Wörtern. Mapcode verwendet zwei Gruppen von Buchstaben und Ziffern gegebenenfalls mit einem Ländercode, hier wird die Adresse des europäischen Patentamts zu Deu C57.MB.

Derartige Codes sind jedoch rein abstrakt und nur über Computersysteme zugänglich. Es gibt keine Möglichkeit, vor Ort mit einer Sensorik den What3words-Code zu erschlie-ßen und dadurch die eigene Position zu erfahren. Lediglich umgekehrt kann erst die Position beispielsweise mittels GPS ermittelt und dann der zugehörige Code abgefragt werden, womit aber die Selbstlokalisation nicht unterstützt wird, sondern weiterhin nur auf GPS basiert. Darüber hinaus besteht keine Möglichkeit, einen eigenen Indoor-Bereich in selbstgewählter Unterteilung in ein solches System einzubinden.

Die noch unveröffentlichte europäische Patentanmeldung mit dem Aktenzeichen 22193749.3 beschreibt eine Kameravorrichtung, die ihre Pose bezüglich eines optischen Markers, insbesondere Fiducial Markers, durch Verwendung zweier Kamerakanäle auf sichere Weise bestimmt. Damit kann sich die Kameravorrichtung relativ zu dem Marker lokalisieren, was aber nicht zu einer Lösung der Problemstellung beiträgt, die Position des Markers selbst zu bestimmen.

Es ist daher Aufgabe der Erfindung, die Selbstlokalisation durch optische Marker weiter zu verbessern.

Diese Aufgabe wird durch ein Verfahren zur Selbstlokalisation in einer Navigationsumgebung und ein selbstlokalisierendes Fahrzeug nach Anspruch 1 beziehungsweise 12 gelöst. Die Navigationsumgebung kann beliebig sein, wobei das Verfahren sich besonders für den Indoor-Bereich eignet, wo kein satellitengestütztes Lokalisierungsverfahren zur Verfügung steht. Es werden optische Marker an einer Vielzahl von Positionen der Navigationsumgebung angebracht. Ein Codeleser erfasst einen Marker in seinem Sichtbereich und liest den Codeinhalt des Markers, um damit die Position des Markers zu bestimmen. Als Codeleser kommt jedes an sich dafür bekannte Gerät in Frage, beispielsweise eine Kamera. Unmittelbar lokalisiert sich effektiv nur der Codeleser, damit aber mittelbar auch dessen Träger, vorzugsweise ein autonomes Fahrzeug oder ein mobiler Roboter (AMR, autonomous mobile robot).

Die Erfindung geht von dem Grundgedanken aus, optische Marker in Gruppen von mindestens drei Markern zusammenzufassen. Jeder einzelne Marker hat nur einen begrenzten Wertebereich, es gibt also weniger und vorzugsweise sehr deutlich weniger unterscheidbare einzelne Marker als Positionen mit Marker. Beispielsweise codiert ein einzelner Marker nur eine Ziffer, einen Buchstaben oder nur eine zweistellige Zahl, wobei numerische Codeinhalte bevorzugt sind, während hunderte, tausende oder noch sehr viel mehr Positionen zu unterscheiden sind. Erst die Codeinhalte der mindestens drei Marker einer Gruppe gemeinsam bezeichnen eindeutig eine Position. Vorzugsweise werden die Codeinhalte dafür zu einem Kombinationscode zusammengefasst. Bevorzugt werden die Gruppen jeweils von genau drei Markern als Optimum zwischen einer geringen Anzahl Marker und einer ausreichenden Anzahl eindeutig codierender Gruppen gebildet. Eine anschauliche Bezeichnung dieses Gedankens vor dem Hintergrund des einleitend diskutierten Standes der Technik lautet What3markers.

Das Verfahren ist computerimplementiert, es läuft beispielsweise in dem Codeleser, einer auch mittels Netzwerks oder über eine Cloud angeschlossenen Recheneinheit oder beispielsweise einer Fahrzeugsteuerung ab, wobei eine verteilte Implementierung möglich ist. Nur die optische Erfassung des Markers muss vor Ort erfolgen, jegliche weitere Verarbeitung kann ausgelagert werden. Allerdings ist es vorteilhaft, zumindest noch das Decodieren vor Ort, also in dem Codeleser oder zumindest dem Träger des Codelesers vorzunehmen, so dass die mit extern auszutauschenden Informationen begrenzt bleiben.

Die Erfindung hat den Vorteil, dass eine besonders kostengünstige und zugleich sehr robuste Form der Selbstlokalisation ermöglicht wird. Da die Codes nur einen kleinen Wertebereich aufweisen, beispielsweise nur eine Ziffer, genügt eine sehr einfache Kamera, um den Codeinhalt auszulesen. Deren Bilder können zugleich für andere Aufgaben verwendet werden, beispielsweise eine Hinderniserkennung. Durch das Prinzip der drei Marker in einer Gruppe wird dennoch eine große Navigationsumgebung mit hoher Ortsauflösung zugänglich. Über die Dichte der Marker können Größe der Navigationsumgebung und Ortsauflösung sogar sehr einfach skaliert werden. Die Selbstlokalisierung ist in einer Dimension, beispielsweise längs einer Schiene, in zwei Dimensionen und auch in drei Dimensionen in einem Gebäude mit mehreren Stockwerken oder hohen Regalen möglich. Aufwändige technische Lösungen wie Indoor-GPS oder daran angelehnte Systeme wie Ultraschall-, Radar-, WLAN- oder Mobilfunknavigation sind ebenso wenig erforderlich wie komplexe Algorithmen zur Lokalisation und Kartierung (etwa SLAM). Das Konzept ermöglicht eine Art Schwarmintelligenz für mehrere Fahrzeuge in derselben Navigationsumgebung. Ein Anschluss an übergeordnete Systeme, etwa zur Lagerverwaltung, zur Risikoanalyse oder zu Datenanalyse und Optimierung von Fahrwegen und sonstigen Prozessen ist einfach möglich.

Die Navigationsumgebung ist bevorzugt in eine Vielzahl von Zellen unterteilt, insbesondere in einem Gitter, wobei den Zellen jeweils eine Gruppe von Markern zugeordnet ist. Über die Zellen kann eine gewünschte Positionsauflösung vorgegeben werden. Vorzugsweise sind die Zellen regelmäßig und gleich groß, wie dies insbesondere bei einem Gitter der Fall ist. Abweichend können Zellen auch individuell oder irregulär sein beziehungsweise Positionen mit einer jeweiligen Gruppe von Markern beliebig angeordnet werden. Es ist denkbar, in einem Gitter mindestens eine Zelle ohne Gruppe von Markern zu belassen, gerade dann, wenn das Anbringen von Markern mancherorts nicht möglich ist. Wie unten noch erläutert, kann aber eine Gruppe von Markern Auskunft über die Umgebung geben, dies auch über eine Zelle ohne eigene Gruppe von Markern.

Vorzugsweise wird eine Pose des Codelesers bezüglich eines erfassten Markers bestimmt, um einen Versatz zu der durch die Gruppe von Markern bezeichnete Position zu bestimmen. Damit lokalisiert sich der Codeleser relativ zu der Gruppe von Markern in bis zu sechs Freiheitsgraden der Position und Drehung. Ein jeweiliger optischer Marker weist bevorzugt mindestens drei Referenzmerkmale bekannter Positionen innerhalb des optischen Markers auf. Es handelt sich insbesondere um einen Fiducial Marker (Passermarker, Rahmenmarker). Die drei Referenzmerkmale ermöglichen die Posenbestimmung nach Art des Dreibeins, indem sie eine 2D-Geometrie im Raum festlegen, wobei vorzugsweise für eine redundante und insgesamt robustere Posenbestimmung vier oder noch mehr Referenzmerkmale vorgesehen sind. Fiducial Marker sind an sich bekannt, und es wird ergänzend auf die Einhaltung verwiesen. Durch Bestimmung der Pose ist einerseits die Position der Gruppe von Markern aus deren Codeinhalten bekannt, andererseits die relative Position des Codelesers bezüglich des Markers, und somit insgesamt die genaue Position des Codelesers und damit seines Trägers. Dabei sollte noch die Montageposition des Codelesers bezüglich des Trägers berücksichtigt werden. Besonders geeignet für die Bestimmung der Pose des Codelesers bezüglich eines erfassten Markers ist eine Kamera mit Abstandsbestimmung, d.h. eine 3D-Kamera. Dafür eignet sich ein beliebiges an sich bekanntes 3D-Verfahren, beispielsweise die an das menschliche Sehen angelehnte Stereoskopie, Triangulationsverfahren zu einem bekannten projizierten Beleuchtungsmuster oder Bildsensoren mit Lichtlaufzeitmessung in ihren Pixeln (ToF, Time of Flight).

Die Pose wird vorzugsweise mehrfach für mehrere, insbesondere alle Marker einer Gruppe bestimmt. Jeder Marker eignet sich für sich, um die relative Pose des Codelesers zu dem Marker zu bestimmen. Jede Gruppe bietet also mehrere Möglichkeiten der Posenbestimmung. Es kann dann anschließend eine durchschnittliche Pose gebildet werden.

Die Codeinhalte der mindestens drei Marker einer Gruppe werden bevorzugt zu einem mindestens Dreiertupel zusammengefasst. Die Codeinhalte bilden somit einen Kombinationscode, im bevorzugten optimalen Fall mit drei Markern je Gruppe ein Dreiertupel oder Triplet. Das kann als Codeinhalt1.Codeinhalt2.Codeinhalt3 notiert werden, im bevorzugten Fall von Ziffern oder zweistelligen Zahlen entsprechend $c_1.c_2.c_3$ mit $c_1...c_3$ als Ziffer oder zweistellige Zahl. Es ist zu beachten, dass dies Koordinaten allenfalls im virtuellen Parameterraum der möglichen eindeutigen Bezeichner sind, die mit Weltkoordinaten vorzugsweise nichts zu tun haben. Aus einer kleinen Differenz zwischen zwei Kombinationscodes kann dann nicht auf eine räumliche Nähe geschlossen werden. Die Triplets sind eindeutig, aber vorzugsweise ohne intuitiv nachvollziehbare Ordnung. Besonders bevorzugt spielt die Reihenfolge keine Rolle, es gibt also keinen Unterschied zwischen $c_1.c_2.c_3$ und $c_2.c_3.c_1$, und weder beim Anbringen noch beim Lesen der Marker muss auf die Reihenfolge innerhalb der Gruppe geachtet werden. Das entspricht in der Kombinatorik von Kombinationscodes einem Ziehen ohne Zurücklegen und wäre für übliche Weltkoordinaten völlig undenkbar. Alternativ ist denkbar, dass die Reihenfolge doch wichtig ist. In diesem Fall kann ein Symmetriebrecher für eine jeweilige Gruppe angebracht und erkannt werden, also ein zusätzliches optisches Merkmal, das eine Leserichtung vorgibt.

Der Codeinhalt mindestens eines Markers einer Gruppe enthält bevorzugt eine weitere Information, die über das eindeutige Bezeichnen der Position mit den anderen Markern der Gruppe hinausgeht. Es gibt dann sozusagen zwei Codefamilien in der Navigationsumgebung, nämlich einmal die erfindungsgemäßen Gruppen von mindestens drei Markern und zusätzliche optische Marker, die mit der Gruppe angebracht sein können. Die zusätzliche Information wird für die bisher erläuterte Selbstlokalisierung nicht gebraucht, sie kann beispielsweise sonstige Navigationsanweisungen oder Informationen für eine andere Anwendung als die Navigation betreffen. Weitergehend ist denkbar, dass ein Marker eine Doppelfunktion in beiden Codefamilien ausfüllt. Dabei ist ein anderes Erscheinungsbild denkbar, wie eine andere Farbe, andere Größe oder dergleichen, womit der Marker der zweiten Codefamilie zudem noch als Symmetriebrecher fungieren kann. Die weitere Information kann aber schlicht auch im Erscheinungsbild des mindestens einen Markers liegen, der insbesondere größer ist, um eine Posenbestimmung zu erleichtern.

Die Marker werden bevorzugt zumindest teilweise auf einer veränderlichen Anzeige angezeigt. Dazu kann ein Tablet, ein elektronisches Papier oder dergleichen dienen. Eine veränderliche Anzeige ermöglicht es, zwischen optischen Markern umzuschalten, beispielsweise für einen Notfall wie einen Feueralarm. Alternativ sind die einmal angebrachten Marker unveränderlich, typischerweise in Form von Aufklebern.

Mit den Codeinhalten der mindestens drei Marker einer Gruppe wird bevorzugt eine zusätzliche Information aus einer Datenbank abgefragt. Der Informationsgehalt einer Gruppe genügt, um eine eindeutige Position in der Navigationsumgebung herauszufinden. Häufig besteht aber Bedarf, zu der Gruppe beziehungsweise der Position mehr zu erfahren. Dies ließe sich nur äußerst begrenzt in den Markern codieren und würde auch die Idee einfacher Marker konterkarieren. Über die eindeutige Gruppe beziehungsweise den Kombinationscode beziehungsweise das Triplet der Codeinformationen lässt sich aber eine Datenbankabfrage realisieren, mit der die Begrenzung der Informationsmenge für praktische Belange aufgehoben ist. Vorzugsweise liegt die Datenbank extern, insbesondere in einer Cloud. Zumindest Teile der Datenbank können im Codeleser beziehungsweise dessen Träger abgelegt sein, beispielsweise einem Fahrzeug, wobei dies auch sukzessive oder temporär als Puffer früherer Abfragen und Ergebnisse aufgebaut werden kann. Damit entsteht eine gewisse Unabhängigkeit zumindest in einer näheren Umgebung oder auf häufig befahrenen Wegen. Für eine noch zu beschreibende vorteilhafte Ausführungsform mit einer dynamischen Datenbank sollte dann aber regelmäßig ein Abgleich erfolgen.

Die Datenbank stellt zu einer mit einer Gruppe von mindestens drei Markern bezeichneten Position mindestens eine der folgenden Gruppeninformationen bereit: eine nähere Beschreibung der Position oder ihrer Umgebung, einen Versatz der Gruppe von mindestens drei Markern zu der damit bezeichneten Position, mindestens eine Navigationsregel. Gruppeninformation heißt dies deshalb, weil sie einer Gruppe und damit einer Position zugeordnet ist. Mit einer Gruppeninformation kann die Position näher beschrieben werden, etwa dass es sich um das Gebäude X oder die Abteilung Y handelt. Es kann eine Umgebungsbeschreibung erfolgen, wie Hinweise auf Hindernisse oder Gefahren in bestimmten Richtungen, aber auch eine lokale Karte mit benachbarten Zellen und dortigen Gruppen von Markern beziehungsweise deren Kombinationscodes. Eine mögliche Gruppeninformation gibt einen Versatz der codierten Position zur tatsächlichen Position der Gruppe an. Das ermöglicht es, die Marker an einer gut einsehbaren oder überhaupt nur zugänglichen Position innerhalb oder sogar außerhalb ihrer Zelle anzubringen, insbesondere abweichend von einem regulären Gitter. Eine Navigationsregel gibt Anweisungen für die nächsten Bewegungen oder Aktionen, und der nächste Absatz gibt Beispiele dafür. Gruppeninformationen können zudem Metadaten enthalten, wie Zeitstempel, Verwaltungsdaten oder Ereignisse, etwa zum Alter des Markers, einer Historie, wann und von welchem Gerät diese Gruppe bereits erfasst wurde, oder zum Alter und Ursprung von Navigationsregeln beziehungsweise dem Zeitpunkt ihrer letzten Änderung.

Die Navigationsregel umfasst bevorzugt mindestens eine der folgenden Anweisungen: eine Richtungsangabe, eine Entfernungsangabe, eine Geschwindigkeitsvorgabe, eine Aufforderung zum Aufnehmen oder Ablegen eines Objekts, eine Aufforderung zum Nachladen eines Akkus. Es kann sich also um eine Navigationsregel im engeren Sinne handeln, die bestimmte Bewegungen vorgibt, wie fahre nach vorne, drehe nach links, rechts, kehre um, fahre eine bestimmte Strecke weit, oder die Bewegungen eingrenzt, etwa hinsichtlich eines Geschwindigkeits- oder Beschleunigungsrahmens. Es sind aber auch andere Aktionen denkbar, die mit der Navigation zusammenhängen, etwa die Anweisung, einem bestimmten Objekt zu folgen, eine gewisse Zeit oder auf ein bestimmtes Ereignis zu warten, etwas aufzuheben oder abzulegen oder den Akku an einer Ladestation aufzuladen.

Mindestens eine Gruppeninformation der Datenbank wird vorzugsweise dynamisch verändert, insbesondere um auf eine aktuelle Aufgabe, auf Personen oder auf Fahrzeuge in der Navigationsumgebung zu reagieren. Das ermöglicht eine flexible, situationsbezogene Navigation. Über die Indirektion der dynamischen Datenbank, auf die über die Gruppe von Markern beziehungsweise deren Triplet der Codeinformationen oder Kombinationscode zugegriffen wird, lassen sich so effektiv fixen optischen Markern variable Informationen zuordnen. Damit kann eine Aufgabe anders gestellt oder beispielsweise auf Fahrzeuge oder Personen in der Navigationsumgebung reagiert werden, insbesondere um situationsbezogen die Fahrwege anzupassen.

Ein erfindungsgemäßes selbstlokalisierendes Fahrzeug, insbesondere ein autonomes Fahrzeug oder ein mobiler Roboter, bewegt sich in einer Navigationsumgebung, in der Positionen mit Gruppen von mindestens drei Markern bezeichnet sind. Das Fahrzeug und die mit den Markern versehene Navigationsumgebung bilden somit ein gemeinsames System. Eine Steuer- und Ausführungseinheit, beispielsweise die Fahrzeugsteuerung, ist für eine Selbstlokalisation und Navigation durch Lesen der Codes einer Gruppe und Bestimmung der damit eindeutig bezeichneten Position ausgebildet, insbesondere durch eine Ausführungsform des erfindungsgemäßen Verfahrens. Die Funktionalität der Steuer- und Ausführungseinheit kann über den Codeleser, das Fahrzeug und angeschlossene Recheneinheiten insbesondere einer Cloud verteilt sein.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:

Fig. 1 eine schematische Darstellung eines Fahrzeugs als beispielhafter Träger eines Codelesers zum Erfassen einer Gruppe von optischen Markern, aus deren Codeinhalten eine Position ermittelt wird;

Fig. 2 eine schematische Darstellung zur Illustration der Unterteilung einer Navigationsumgebung in Zellen mit jeweiliger Gruppe von optischen Markern;

Fig. 3 eine schematische Darstellung der Kommunikationsverbindungen eines Fahrzeugs mit Codeleser entsprechend Figur 1 und einer damit verbundenen Datenbank;

Fig. 4 eine beispielhafte Darstellung einer Gruppe optischer Marker mit zusätzlichem Symmetriebrecher;

Fig. 5 eine beispielhafte Darstellung einer Gruppe optischer Marker aus zwei Codefamilien; und

Fig. 6 eine beispielhafte Darstellung einer alternativen Gruppe optischer Marker aus zwei Codefamilien.

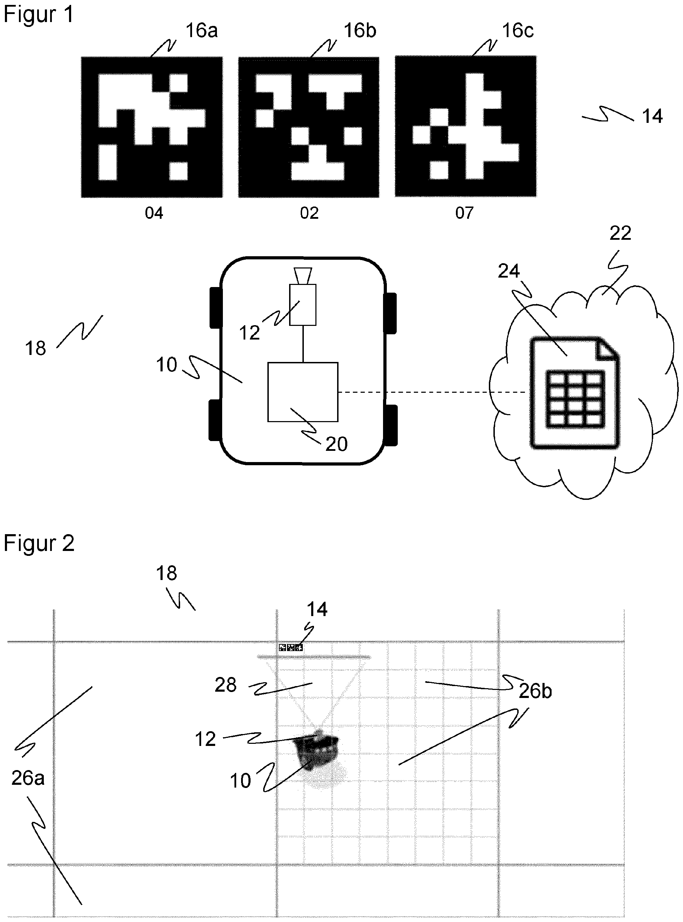

Figur 1 zeigt eine schematische Darstellung eines Fahrzeugs 10 mit einem Codeleser 12 zum Erfassen einer Gruppe 14 von optischen Markern 16a-c, aus deren Codeinhalten eine Position des Codelesers 12 und unter Berücksichtigung von dessen Montagepose auch des Fahrzeugs 10 ermittelt wird. Das Fahrzeug 10 ist beispielsweise ein autonomes Fahrzeug (AGV, automated guided vehicle) oder ein mobiler Roboter (AMR, autonomous mobile robot) und steht stellvertretend für einen beliebigen Träger des Codelesers 10, wobei dieser Träger prinzipiell auch eine Person sein kann. Mittels der Gruppe 14 optischer Marker 16a-c erfolgt eine Selbstlokalisation des Fahrzeugs 10.

Die Selbstlokalisation, also Kenntnis der eigenen Position in einer Navigationsumgebung 18, ermöglicht dann wiederum eine Navigation des Fahrzeugs 10. Beispiele für die Navigationsumgebung 18 im Innenbereich (Indoor) sind Logistikzentren, Fabriken, Verwaltungsgebäude, Flughafengebäude, Krankenhäuser, Ausstellungen oder auch Landwirtschaft in der Senkrechten (vertical farming). Auch im Außenbereich ist die Anwendung zunächst nicht beschränkt, zielt aber vor allem auf begrenzte, durch übliche Geokodierungen wie Postanschriften nicht erschlossene Bereiche, wie Häfen, Flugplätze, Beladezonen von Logistikzentren oder landwirtschaftlichen Flächen oder Weinreben.

Der Codeleser 12 kann als einfache Kamera ausgebildet sein wie dargestellt, mit einem nicht selbständig gezeigten Bildsensor, der vorzugsweise als matrixförmiger Aufnahmechip ausgebildet ist und ein rechteckiges Pixelbild aufnimmt, beispielsweise ein CCD- oder ein CMOS-Sensor. Mit an sich bekannten Bildverarbeitungsverfahren wird dann der Codeinhalt eines Markers 16a-c gelesen. Die Erfindung ist auf keinen bestimmten Codeleser 12 beschränkt, solange die verwendeten Marker 16a-c gelesen werden. Die Bildaufnahme kann als Nebenfunktion eines beliebigen Bildaufnahmegeräts erfolgen, etwa einer Bordkamera zur Hinderniserkennung oder eines mitgeführten Tablets oder Mobiltelefons.

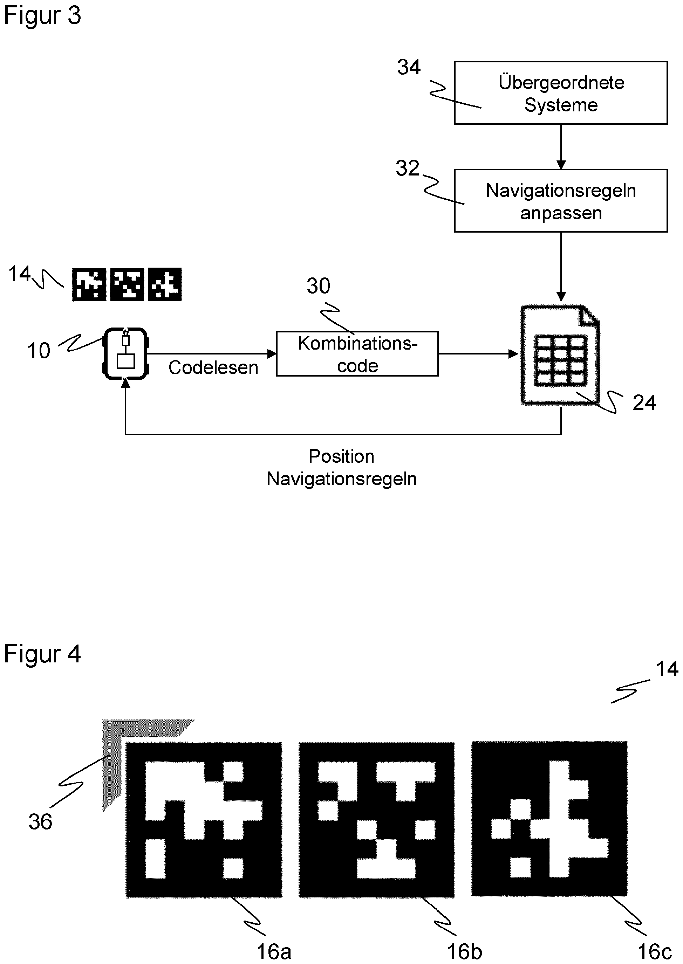

An den Codeleser 12 ist eine Steuer- und Auswertungseinheit 20 angeschlossen. In Figur 1 handelt es sich um eine Fahrzeugsteuerung. Allgemein sind aber beliebige mitgeführte oder mittels vorzugsweise drahtloser Netzwerkverbindung angeschlossene Recheneinheiten möglich, die auf verschiedenster Hardware basieren, beispielsweise einem oder mehreren digitalen Bausteinen wie Mikroprozessoren, ASICs (Application Specific Integrated Circuit), FPGAs (Field Programmable Gate Array), GPUs (Graphics Processing Unit) oder Mischformen davon, wobei die digitalen Bausteine zumindest teilweise in den Codeleser 12 integriert sein können. Als externe Recheneinheiten sind insbesondere ein Edge-Device oder wie gezeigt eine Cloud 22 zu nennen. Die Steuer- und Auswertungsfunktionalität kann beliebig auf diese Elemente verteilt sein, wobei später unter Bezugnahme auf Figur 3 bevorzugte Aufgabenteilungen erläutert werden.

Als Marker 16a-c sind beispielhaft AprilTags eingesetzt, wobei andere optische Codierungen ebenfalls denkbar sind. Allerdings sind Passermarken (Fiducial Markers) bevorzugt, da sie die Bestimmung einer relativen Pose von Codeleser 12 zu Marker 16a-c vereinfachen. Derartige Marker werden auch wesentlich robuster gelesen. Die Einleitung nennt weitere Beispiele für optische Codes und Passermarken. Der Codeinhalt eines jeweiligen Markers 16a-c ist eine Ziffer oder Zahl, im gezeigten Beispiel sind es die Zahlen 04, 02 und 07. Der Wertebereich von Ziffern oder auch zweistelligen Zahlen ist viel zu klein, um eine nennenswert große Navigationsumgebung 18 mit einer nutzbaren Ortsauflösung durch eindeutige einzelne Marker 16a-c zu kennzeichnen. Große Zahlen wiederum erschweren das Codelesen, so dass nicht mehr mit einfachen Codelesern 12, größeren Reichweiten, schlechten Sichtbedingungen und dergleichen gearbeitet werden könnte.

Deshalb sind die Marker 16a-c in Gruppen 14 zusammengefasst. Vorzugsweise handelt es sich um Dreiergruppen oder Triplets, aber die Anzahl k=3 ist zunächst nicht festgelegt. Die Gruppe 14 gemeinsam erweitert den effektiven Wertebereich exponentiell, in dem Positionen eindeutig bezeichnet werden können. Die einzelnen Codeinhalte der Marker 16a-c werden zu einem Kombinationscode oder Triplet zusammengefasst, im Beispiel der Figur 1 zu 04.02.07 in beliebiger Syntax. Dies kann in Anlehnung an den einleitend zitierten Stand der Technik als "What3markers" bezeichnet werden.

Je nach Ausführungsform kann die Reihenfolge der Marker 16a-c und von deren Codeinhalten eine Rolle spielen oder nicht, wobei letzteres die Erfassung erleichtert, da keine Orientierungen oder Leserichtungen beachtet werden müssen. Bei einem Wertebereich n, etwa n=10 für eine Ziffer, für die einzelnen Marker 16a-c und einer Anzahl k, etwa k=3, von Markern 16a-c je Gruppe ergeben sich mit Beachtung der Reihenfolge $n^k$ und ohne Beachtung der Reihenfolge ($\binom{n}{k}$) eindeutige Kombinationscodes entsprechend einem Ziehen mit/ohne Zurücklegen aus der Kombinatorik. Für die AprilTag-Familie "36h11" gilt n=587, so dass aus drei entsprechenden Markern 16a-c auch im hinsichtlich der Kombinatorik etwas ungünstigeren Fall ohne Beachtung der Reihenfolge 201.229.470 eindeutige Kombinationscodes gebildet werden können. Das genügt für eine Fläche von ca. 201 km² mit je einer Gruppe 14 pro m². Sollte dennoch die Anzahl verfügbarer Kombinationscodes nicht genügen, so besteht die Möglichkeit, Navigationsumgebungen 18 mit übergeordneten Codes zu versehen, wie "X" Stockwerke in "Y" Gebäuden in "Z" Ländern. Das hat auch den Vorteil, dass große Datenmengen ortsübergreifend zusammengefasst und ausgewertet werden können.

Der Kombinationscode bezeichnet eindeutig eine Position, dies aber in einem für die Navigation unbrauchbaren Format. Denn die Verteilung der Kombinationscodes über die Navigationsumgebung 18 erfolgt vorzugsweise überhaupt nicht entsprechend der geometrischen Anordnung, sondern internen Kriterien, einer Historie mit immer wieder nachträglich angebrachten Gruppen 14 oder sogar der gezielten Anforderung, räumlich benachbarte Gruppen 14 zur Vermeidung von Verwechslungen möglichst unterschiedlich zu halten. In Ausführungsformen, in denen die Reihenfolge der Marker 16a-c nicht beachtet wird, erschließt sich sofort, dass es keine sinnvolle geometrische Beziehung zwischen dem Kombinationscode und der Position im Sinne räumlicher Koordinaten geben kann.

Um zu einer verarbeitbaren Positionsinformation zu kommen, fragt deshalb vorzugsweise die Steuer- und Auswertungseinheit 20 bei einer Datenbank 24 mit dem Kombinationscode die zugehörige eindeutige Position ab. Die Datenbank 24 ist bevorzugt in einer Cloud 22 implementiert, kann aber alternativ auch auf dem Fahrzeug 10 mitgeführt werden. Die Datenbank 24 hebt auch die Begrenzung des Informationsgehalts von optischen Markern auf, denn zu dem Kombinationscode können noch beliebige weitere Gruppeninformationen zur Verfügung gestellt werden. Gruppeninformation bedeutet, dass diese Informationen der Gruppe und damit der Position zugeordnet sind. Dazu können insbesondere Navigationsregeln zählen. Die Gruppe 14 fungiert dann als eine Art Verkehrslotse.

Die Marker 16a-c sind vorzugsweise dauerhaft in der Navigationsumgebung 18 angeordnet. Dazu eignen sich Aufkleber, die entsprechend bedruckt werden. Alternativ sind elektronische Anzeigen vorstellbar, wie Tablets oder EBook-Reader, mit denen die angezeigten Marker 16a-c dynamisch veränderbar sind. Beispielsweise können während einer Wartung oder im Notfall andere Marker 16a-c oder ganz andere Informationen angezeigt werden, die auch einer Diagnose oder dem initialen Aufbau des Systems dienen können. Elektronische Anzeigen richten sich in erster Linie an Personen. In einem funktionierenden System mit automatischem Ablauf werden Veränderungen vorzugsweise über die Datenbank 24 vorgenommen, d.h. die Marker 16a-c und damit die Kombinationscodes bleiben dann gleich, aber die dazu hinterlegten Gruppeninformationen können sich ändern.

Figur 2 zeigt eine schematische Darstellung zur Illustration der Unterteilung einer Navigationsumgebung 18 in Zellen 26a-b mit jeweiliger Gruppe 14 von optischen Markern 16a-c. Es sind skalierbare Unterteilungen in regelmäßige Gitter oder auch unregelmäßige Zellen 26a-b möglich, wie durch zwei alternative Größen mit großen Zellen 26a einerseits oder kleinen Zellen 26b andererseits gezeigt. Es ist vorstellbar, dass eine automatische Verteilung von Zellen 26a-b vorgenommen wird, die eine optimale Gitterkonstante bestimmt beziehungsweise eine Anordnung von Zellen 26a-b optimal in eine Navigationsumgebung 18 einpasst.

Die kleinen Zellen 26b der Figur 2 können alternativ noch anders verstanden werden als das Ergebnis einer feineren Unterteilung der Navigationsumgebung mit mehr Gruppen 14 von optischen Markern 16a-c. Es ist nämlich in einigen Ausführungsformen möglich, dass der Codeleser 12 seine Pose relativ zu einem Marker 16a-c in bis zu sechs Freiheitsgraden bestimmt, wobei dies ausnutzt, wo ein Marker 16a-c innerhalb des Sichtfeldes 28 des Codelesers 12 erfasst wurde. Das gelingt bevorzugt bei Verwendung von Passermarken. AprilTags bringt einen entsprechenden Mechanismus zu Selbstlokalisation relativ zu dem Marker bereits mit. Dadurch wird dann eine genauere Selbstlokalisation entsprechend den kleinen Zellen 26b möglich, obwohl nur in einer jeweiligen großen Zelle 26a eine Gruppe 14 von Markern 16a-c angebracht ist. Da eine Gruppe 14 mehrere Marker 16a-c aufweist, kann die Pose sogar mehrfach mit systematischem Versatz entsprechend der Anordnung der Marker 16a-c innerhalb ihrer Gruppe 14 bestimmt werden. Die Posenbestimmung kann so mittels Durchschnittsbildung oder Vergleich von Einzelergebnissen noch robuster werden.

Es ist nicht zwingend erforderlich, dass jede Zelle 26a-b mit einer Gruppe 14 von Markern 16a-c versehen ist. Das ist manchmal gar nicht möglich, weil Säulen, Regale, Türen und dergleichen im Weg sind. Das Fahrzeug 10 kann dann seine Position anhand der Pose bezüglich einer Gruppe 14 von Markern 16a-c einer benachbarten Zelle 26a-b bestimmen. Eine weitere Möglichkeit ist, dass die Gruppe 14 einer Zelle 26a-b außerhalb ihrer Zelle 26a-b angebracht ist und den Versatz als Gruppeninformation mitteilt.

Figur 3 zeigt eine schematische Darstellung der Kommunikationsverbindungen eines Fahrzeugs 10 entsprechend Figur 1, dessen Unterstruktur nur noch andeutungsweise dargestellt ist, und der damit verbundenen Datenbank 24 vorzugsweise in einer Cloud. Wie schon zu Figur 1 erläutert, liest der Codeleser 12 mittels entsprechender Bildverarbeitung die Marker 16a-c der Gruppe und setzt deren Codeinhalte zu einem eindeutigen Kombinationscode 30 zusammen. Mit dem Kombinationscode 30 wird die Datenbank 24 abgefragt und die eindeutige Position zurückgegeben. Es können weitere Gruppeninformationen mitgeteilt werden, wobei beispielhaft Navigationsregeln genannt sind. Die Abfrage über den Kombinationscode kann optional mit einer Verschlüsselung oder einer Checksumme wie CRC abgesichert werden.

In der Datenbank 24 bildet jeder Kombinationscode 30 einen Eintrag, der den Kombinationscode 30 mit der zugehörigen eindeutigen Position und möglicherweise Gruppeninformationen verknüpft. Dabei kann es Metadaten geben, wie Zeitstempel zu gelesenen Markern 16a-c und daraus abgeleiteten Kombinationscodes 30, Zeitstempel zu Gruppeninformationen oder deren Änderung, oder welcher Codeleser 12 mit welchem Bild eine Abfrage vorgenommen hat. Die bloße Position kann um weitere Details der Umgebung der betreffenden Zelle 26a-b ergänzt werden, beispielsweise wo genau befindet sich die Gruppe 14 in ihrer Zelle 26a-b, in welche Gebäude, welcher Anlage, welchem Land befindet sich die Zelle 26a-b, wie ist die Umgebung beschaffen, sei es hinsichtlich vorhandener Objekte, Hindernisse, Gefahren, welche Zellen 26a-b befinden sich in der Nachbarschaft, insbesondere in Form eines lokalen, interessierenden Bereichs einer globalen Karte etwa in Form der acht umgebenden Zellen 26a-b.

Eine besondere Gruppeninformation bilden Navigationsregeln, die dem Fahrzeug 10 mitteilen, wie es sich bewegen sollte oder welche Bewegungsmöglichkeiten zur Verfügung stehen. Das können Richtungsangaben wie geradeaus, links, rechts oder zurück sein, Entfernungsangaben hinsichtlich eines Ziels oder eines nächsten Bewegungsschritts, oder Vorgaben für Geschwindigkeiten oder Beschleunigungen. Weitere Beispiele sind die Aufforderung, eine gewisse Zeit zu warten, eine bestimmte Position aufzusuchen, einem bestimmten Objekt zu folgen, ein Objekt zu meiden, bestimmte Fahrwege zu wählen oder gerade nicht zu wählen und dergleichen. Navigationsregeln in einem etwas weiteren Sinne lösen eine Aktion aus, wie das Aufnehmen oder Ablegen von Objekten oder das Aufladen eines Akkus des Fahrzeugs 10.

Die Marker 16a-c selbst sind vorzugsweise fix. Oben wurde kurz eine Ausführungsform mit elektronischen Anzeigen diskutiert, aber auch damit ist die Variabilität begrenzt, zumal die anzeigbare und von dem Codeleser 12 erfassbare Informationsmenge sich vorzugsweise mit dem Kombinationscode zumindest weitgehend schon erschöpft. Das System insgesamt kann dennoch sehr dynamisch werden, indem die Datenbank 24 aktualisiert wird. In der Datenbank 24 gibt es keine praktisch relevante Grenze für die vorgehaltenen Gruppeninformationen. Der fixe Kombinationscode erschließt so den Zugang zu einer anpassbaren, aber weiterhin eindeutig positionsbezogenen Informationsquelle.

Dadurch wird eine situative Navigation ermöglicht, und zwar nicht nur in dem Sinne, dass bestimmte Gruppeninformationen an bestimmten Positionen gegeben werden, sondern indem an jeder bestimmten Position sogar neue Gruppeninformationen bereitgestellt werden. Die Anpassung von Navigationsregeln ist in Figur 3 als ein gemeinsamer äußerer Einfluss auf die Datenbank 24 im Block 32 zusammengefasst. Tatsächlich kann es verschiedene Gründe geben, die entgegen der Darstellung auch in der Cloud 22, der Datenbank 24 oder dem Fahrzeug 10 begründet sein können.

Besonders vorteilhaft ist die Möglichkeit, in einer dynamischen Datenbank 24 die Navigationsregeln zu modifizieren. Dafür kann es viele Gründe geben, wie eine Optimierung von Fahrwegen, das Erfüllen neuer Aufgaben, Sicherheitsmaßnahmen, Wartungsarbeiten. Besonders relevant erscheint das Anpassen von Fahrwegen, etwa in Abhängigkeit der Anzahl Fahrzeuge 10 oder Personen in der Navigationsumgebung 18, von Staus, gesperrten Bereichen oder sonstigen Hindernissen. Wenn bekannt ist, dass Gruppen 14 von Markern 16a-c nicht mehr lesbar sind, kann es sinnvoll sein, die entsprechenden Zellen 26a-b nach Möglichkeit zu meiden, da dort eine Selbstlokalisierung scheitern wird und eine Navigation somit zumindest erheblich erschwert ist.

Einfluss auf die Navigationsregeln nehmen insbesondere übergeordnete Systeme 34. Beispielhaft zu nennen sind hier eine Flottenverwaltung, eine dynamische Risikobeurteilung (Behaviour driven Risk Assessment) oder eine Wartungsinformation. Die Flottenverwaltung ist dafür zuständig, dass das System insgesamt effizient funktioniert, und dementsprechend gibt sie dynamisch Navigationsregeln an den einzelnen Positionen vor. Sie kann die Positionen der Fahrzeuge 10 sammeln und so eine Schwarmintelligenz koordinieren. Die Risikobeurteilung hängt beispielsweise von der Anzahl der Personen und deren gegenwärtigen Aufenthaltsorten und Aufgaben ab. Auch rechtliche Vorgaben können eine Rolle spielen, die auch länderbezogen sein können. Oben wurden bereits Umgebungsinformationen als Beispiele einer Gruppeninformation diskutiert. Auch dies muss nicht statisch sein, weil sich Objekte in der Navigationsumgebung 18 verändern. Es sind sogar virtuelle Objekte denkbar, insbesondere Wände, die per Gruppeninformation mitgeteilt werden. Dadurch können Teilbereiche temporär unzugänglich gemacht werden, etwa wenn dort gegenwärtig Personen arbeiten oder Wartungen vornehmen. Es ist sinnvoll, eine Sicherheitskopie der Datenbank 24 anzulegen und Buch über die Änderungen zu führen, insbesondere abgesichert über eine Blockchain.

Als unterliegende Softwarearchitektur wird vorzugsweise ein Publish-and-Subscribe-Mechanismus eingesetzt (ein deutscher Begriff hierfür ist nicht etabliert, grob lässt es sich mit Veröffentlichen und Abonnieren übersetzen). Jeder Pfeil auf die Datenbank 24 lässt sich in diesem Sinne interpretieren. Der Kombinationscode wird veröffentlicht. Ein Algorithmus abonniert diese Information, speichert sie und bestimmt aus der Datenbank 24 zugehörige Positions- oder Gruppeninformationen, insbesondere Navigationsregeln. Das wird dann umgekehrt veröffentlicht und von dem Fahrzeug 10 abonniert, das somit stets aktuelle Gruppeninformationen und Navigationsregeln erhält. Die Anpassung von Navigationsregeln bei Block 32 kann ebenfalls auf Publish-and-Subscribe basieren.

Eine vorteilhafte Implementierung nutzt Cloud-Native-Technologien wie K8s, K3s oder Minikube. Um eine Cloud 22 anzubinden, ist eine mindestens mittelbare Verbindung des Codelesers 12 zum Internet oder einem Intranet mit der Cloud 22 erforderlich. In solchen Cloud-Native-Systemen sind Änderungen einer Datenbank 24 aus mehreren Quellen, das Überwachen solcher Änderungen und eine verlässliche Weiterleitung an die relevanten Abonnenten bereits vorgesehen. Es ist auch möglich einzustellen, welche Informationen zu welchen Zeiten weitergeleitet werden. Ein Teil der Datenbank 24 kann trotz Cloud-Technologien auf dem Fahrzeug 10 selbst gespeichert werden, um den Datenverkehr und entsprechende Latenzen zu reduzieren. Womöglich gibt es auch Navigationsregeln, die aufgrund von Sicherheitsvorschriften, gesetzlichen Vorgaben oder einer Firmenpolitik nicht geändert werden sollen, was entweder in der Datenbank 24 berücksichtigt oder dadurch sichergestellt wird, dass das Fahrzeug 10 solche Navigationsregeln kennt und erforderlichenfalls Vorgaben der Datenbank 24 ignoriert oder überschreibt.

Figur 4 zeigt eine beispielhafte Darstellung einer Gruppe 14 optischer Marker 16a-c mit einem zusätzlichen Symmetriebrecher 36. Das bezeichnet ein optisches Element, mit dem der Gruppe 14 eine gewünschte Orientierung beziehungsweise Leserichtung gegeben wird. Das ist insbesondere interessant, wenn die Reihenfolge der einzelnen Codeinformationen in dem Kombinationscode relevant ist. Die konkrete grafische Ausgestaltung des Symmetriebrechers 36 ist rein beispielhaft, dafür können beliebige Gestaltungselemente einschließlich Firmenlogos und dergleichen verwendet werden.

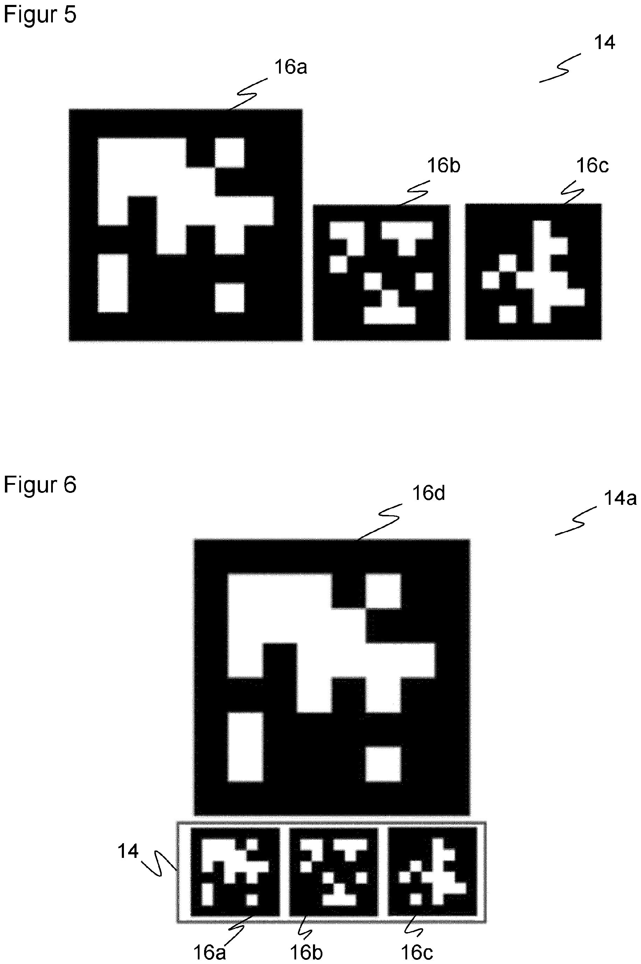

Figur 5 zeigt eine beispielhafte Darstellung einer Gruppe 14 optischer Marker 16a-c aus zwei Codefamilien. Damit ist gemeint, dass mindestens einer der optischen Marker 16a eine zusätzliche Funktion hat, die sich nicht in dem Beitrag zu dem Kombinationscode erschöpft. Es kann sein, dass der Codeinhalt des mindestens einen optischen Markers 16a eine beliebige Zusatzinformation ist, die insbesondere eine natürlich nur statische Gruppeninformation ersetzt, ohne dafür auf die Datenbank 24 zugreifen zu müssen. Im Beispiel der Figur 5 ist der mindestens eine optische Marker 16a schlicht größer, um die Genauigkeit und Robustheit der oben diskutierte Posenbestimmung zu erleichtern. Dieser Effekt lässt sich auch durch Anordnungen und andere grafische Elemente erreichen, einschließlich der Möglichkeit, dass eine andere Codierung verwendet wird, d.h. beispielsweise kein AprilTag. Außerdem fungiert der mindestens eine optische Marker 16a vorteilhaft zugleich als Symmetriebrecher.

Figur 6 zeigt eine beispielhafte Darstellung einer alternativen Anordnung optischer Marker 16a-d aus zwei Codefamilien. Die Gesamtanordnung der Marker 16a-d bildet eine nun etwas anders verstandene Gruppe 14a. Denn in diesem Fall ist der optische Marker 16d der zweiten Codefamilie nicht Teil der eigentlichen Gruppe 14 und trägt folglich nicht zum Kombinationscode bei, während der mindestens eine Marker 16a der Figur 5 eine Doppelfunktion auch als Teil des Kombinationscodes einnimmt.

## Patentansprüche

1. Verfahren zur Selbstlokalisation in einer Navigationsumgebung (18), in der an einer Vielzahl von Positionen jeweils eine Passermarke (16a-c) angebracht ist, die jeweils mindestens drei Referenzmerkmale bekannter Positionen innerhalb der Passermarke aufweisen, die eine Posenbestimmung nach Art des Dreibeins ermöglichen, wobei mit einem optischen Codeleser (12) eine Passermarke (16a-c) erfasst und deren Codeinhalt gelesen wird, **dadurch gekennzeichnet, dass** aus dem Codeinhalt die Position der Passermarke (16a-c) bestimmt wird, indem die Passermarken (16a-c) in Gruppen (14) von jeweils mindestens drei Passermarken (16a-c) angebracht sind, wobei ein Wertebereich des Codeinhalts der Passermarken (16a-c) kleiner ist als die Anzahl der Positionen mit einer Passermarke (16a-c), und die Codeinhalte der mindestens drei Passermarken (16a-c) einer Gruppe (14) zu einem Kombinationscode zusammengefasst werden und so gemeinsam eindeutig die Position der Gruppe (14) bezeichnen.

2. Verfahren nach Anspruch 1, wobei die Navigationsumgebung (18) in eine Vielzahl von Zellen (26a-b) unterteilt ist, insbesondere in einem Gitter, und den (26a-b) Zellen jeweils eine Gruppe (14) von Passermarken (16a-c) zugeordnet ist.

3. Verfahren nach Anspruch 1 oder 2, wobei eine Pose des Codelesers (12) bezüglich einer erfassten Passermarke (16a-c) bestimmt wird, um einen Versatz zu der durch die Gruppe (14) von Passermarken (16a-c) bezeichnete Position zu bestimmen.

4. Verfahren nach Anspruch 3, wobei die Pose mehrfach für mehrere, insbesondere alle Passermarken (16a-c) einer Gruppe (14) bestimmt wird.

5. Verfahren nach einem der vorhergehenden Ansprüche, wobei die Codeinhalte der mindestens drei Passermarken (16a-c) einer Gruppe (14) zu einem mindestens Dreiertupel zusammengefasst werden, insbesondere ohne Berücksichtigung der Reihenfolge.

6. Verfahren nach einem der vorhergehenden Ansprüche, wobei der Codeinhalt mindestens einer Passermarke (16a, 16d) einer Gruppe (14) eine weitere Information enthält, die über das eindeutige Bezeichnen der Position mit den anderen Passermarken (16a-c) der Gruppe (14) hinausgeht.

7. Verfahren nach einem der vorhergehenden Ansprüche, wobei die Passermarken (16a-c) zumindest teilweise auf einer veränderlichen Anzeige angezeigt werden.

8. Verfahren nach einem der vorhergehenden Ansprüche, wobei mit den Codeinhalten der mindestens drei Passermarken (16a-c) einer Gruppe (14) eine zusätzliche Information aus einer Datenbank (24) abgefragt wird, insbesondere einer Datenbank (24) in einer Cloud (22).

9. Verfahren nach Anspruch 8, wobei die Datenbank (24) zu einer mit einer Gruppe (14) von mindestens drei Passermarken (16a-c) bezeichneten Position mindestens eine der folgenden Gruppeninformationen bereitstellt: eine nähere Beschreibung der Position oder ihrer Umgebung, einen Versatz der Gruppe (14) von mindestens drei Passermarken (16a-c) zu der damit bezeichneten Position, mindestens eine Navigationsregel.

10. Verfahren nach Anspruch 9, wobei die Navigationsregel mindestens eine der folgenden Anweisungen umfasst: eine Richtungsangabe, eine Entfernungsangabe, eine Geschwindigkeitsvorgabe, eine Aufforderung zum Aufnehmen oder Ablegen eines Objekts, eine Aufforderung zum Nachladen eines Akkus.

11. Verfahren nach einem der Ansprüche 8 bis 10, wobei mindestens eine Gruppeninformation der Datenbank (24) dynamisch verändert wird, insbesondere um auf eine aktuelle Aufgabe, auf Personen oder auf Fahrzeuge in der Navigationsumgebung (18) zu reagieren.

12. System mit einem selbstlokalisierenden Fahrzeug (10) in einer Navigationsumgebung (18) und mit einer Vielzahl von Passermarken (16a-c), die jeweils mindestens drei Referenzmerkmale bekannter Positionen innerhalb der Passermarke aufweisen, die eine Posenbestimmung nach Art des Dreibeins ermöglichen, und die an einer Vielzahl von Positionen der Navigationsumgebung angebracht sind, wobei das Fahrzeug (10) einen optischen Codeleser (12) zum Erfassen der Passermarken (16a-c) und zum Lesen von deren Codeinhalt sowie eine Steuer- und Auswertungseinheit (20) aufweist, die dafür ausgebildet ist, eine Selbstlokalisation des Fahrzeugs (10) durchzuführen,
**dadurch gekennzeichnet,**
**dass** die Passermarken (16a-c) in Gruppen (14) von jeweils mindestens drei Passermarken (16a-c) angebracht sind, wobei ein Wertebereich des Codeinhalts der Passermarken (16a-c) kleiner ist als die Anzahl der Positionen mit einer Passermarke (16a-c) und die Codeinhalte der mindestens drei Passermarken (16a-c) einer Gruppe (14) gemeinsam eindeutig die Position der Gruppe (14) bezeichnen, und dass die Steuer- und Auswertungseinheit (20) dafür ausgebildet ist, die Codeinhalte der mindestens drei Passermarken (16a-c) einer Gruppe zu einem Kombinationscode zusammenzufassen, um deren Position zu bestimmen.

**Claims**

1. A method for self-localization in a navigation environment (18), in which a respective fiducial marker (16a-c) is attached at a plurality of positions, each of which comprises at least three reference features of known positions within the fiducial marker that enable a pose determination in the manner of the tripod, wherein a fiducial marker (16a-c) is detected with an optical code reader (12) and the code content thereof is read, **characterized in that** the position of the fiducial marker (16a-c) is determined from the code content by attaching the fiducial markers (16a-c) in groups (14) of at least three, wherein a value range of the code content of the fiducial markers (16a-c) is smaller than the number of positions having a fiducial marker (16a-c), and the code contents of the at least three fiducial markers (16a-c) of a group (14) are combined to form a combination code and thus together unambiguously designate the position of the group (14).

2. The method according to claim 1,

wherein the navigation environment (18) is subdivided into a plurality of cells (26a-b), in particular in a grid, and the cells (26a-b) are each assigned a group (14) of fiducial markers (16a-c).

3. The method according to claim 1 or 2, wherein a pose of the code reader (12) is determined with respect to a detected fiducial marker (16a-c) to determine an offset from the position designated by the group (14) of fiducial markers (16a-c).

4. The method according to claim 3, wherein the pose is determined a plurality of times for a plurality of fiducial markers (16a-c), in particular all fiducial markers (16a-c), of a group (14).

5. The method according to any of the preceding claims, wherein the code contents of the at least three fiducial markers (16a-c) of a group (14) are combined to form an at least three-tuple, in particular without taking into account the sequence.

6. The method according to any of the preceding claims, wherein the code content of at least one fiducial marker (16a, 16d) of a group (14) contains further information which goes beyond the unique designation of the position with the other fiducial markers (16a-c) of the group (14).

7. The method according to any of the preceding claims, wherein the fiducial markers (16a-c) are at least partially displayed on a variable display.

8. The method according to any of the preceding claims, wherein the code contents of the at least three fiducial markers (16a-c) of a group (14) are used to query additional information from a database (24), in particular a database (24) in a cloud (22).

9. The method according to claim 8, wherein the database (24) provides at least one of the following group information for a position designated by a group (14) of at least three fiducial markers (16a-c): a more detailed description of the position or its surroundings, an offset of the group (14) of at least three fiducial markers (16a-c) from the position designated thereby, at least one navigation rule.

10. The method according to claim 9, wherein the navigation rule comprises at least one of the following instructions: a direction indication, a distance indication, a speed indication, a request to pick up or put down an object, a request to recharge a battery.

11. The method according to any of claims 8 to 10, wherein at least one group information of the database (24) is dynamically modified, in particular to react to a current task, to persons or to vehicles in the navigation environment (18).

12. A system comprising a self-locating vehicle (10) in a navigation environment (18) and a plurality of fiducial markers (16a-c) each comprising at least three reference features of known positions within the fiducial marker that enable a pose determination in the manner of the tripod and that are attached at a plurality of positions in the navigation environment, the vehicle (10) comprising an optical code reader (12) for detecting the fiducial markers (16a-c) and for reading their code content, as well as a control and evaluation unit (20) configured to carry out self-localization of the vehicle (10), **characterized in that** the fiducial markers (16a-c) are attached in groups (14) of at least three fiducial markers (16a-c), wherein a value range of the code content of the fiducial markers (16a-c) is smaller than the number of positions having a fiducial marker (16a-c) and the code contents of the at least three fiducial markers (16a-c) of a group (14) together uniquely designate the position of the group (14), and **in that** the control and evaluation unit (20) is configured to combine the code contents of the at least three fiducial markers (16a-c) of a group to form a combination code in order to determine their position.

**Revendications**

1. Procédé d'auto-localisation dans un environnement de navigation (18) dans lequel un marqueur de repère (16a-c) respectif est placé à une pluralité de positions, lequel présente au moins trois caractéristiques de référence respectives de positions connues à l'intérieur du marquer de repère, qui permettent de déterminer une pose à la manière d'un trépied, un lecteur de code optique (12) permettant de détecter un marqueur (16a-c) et de lire le contenu de code de celui-ci, **caractérisé en ce que** la position du marqueur de repère (16a-c) est déterminée à partir du contenu de code du fait que les marqueurs de repère (16a-c) sont placés en groupes (14) d'au moins trois marqueurs de repère (16a-c) respectifs, sachant qu'une plage de valeurs du contenu de code des marqueurs de repère (16a-c) est plus petite que le nombre de positions avec un marqueur de repère (16a-c), et que les contenus de code desdits au moins trois marqueurs de repère (16a-c) d'un groupe (14) sont regroupés en un code de combinaison et désignent ainsi ensemble de façon univoque la position du groupe (14).

2. Procédé selon la revendication 1, dans lequel l'environnement de navigation (18) est subdivisé en une pluralité de cellules (26a-b), en particulier en une grille, et un groupe (14) de marqueurs de repère (16a-c) est associé à chacune des cellules (26a-b).

3. Procédé selon la revendication 1 ou 2, dans lequel une pose du lecteur de code (12) par rapport à un marqueur de repère (16a-c) détecté est déterminée, afin de déterminer un décalage par rapport à la position désignée par le groupe (14) de marqueurs de repère (16a-c).

4. Procédé selon la revendication 3, dans lequel la pose est déterminée plusieurs fois pour plusieurs, en particulier tous les marqueurs de repère (16a-c) d'un groupe (14).

5. Procédé selon l'une des revendications précédentes, dans lequel les contenus de code desdits au moins trois marqueurs de repère (16a-c) d'un groupe (14) sont regroupés en au moins un triplet, en particulier sans tenir compte de l'ordre chronologique.

6. Procédé selon l'une des revendications précédentes, dans lequel le contenu de code d'au moins un marqueur de repère (16a, 16d) d'un groupe (14) comprend une information supplémentaire qui va au-delà de la désignation univoque de la position avec les autres marqueurs de repère (16a-c) du groupe (14).

7. Procédé selon l'une des revendications précédentes, dans lequel les marqueurs de repère (16a-c) sont au moins partiellement affichés sur un écran d'affichage variable.

8. Procédé selon l'une des revendications précédentes, dans lequel, avec les contenus de code desdits au moins trois marqueurs de repère (16a-c) d'un groupe (14), une information supplémentaire est interrogée dans une base de données (24), en particulier une base de données (24) dans un nuage (22).

9. Procédé selon la revendication 8, dans lequel la base de données (24) fournit, pour une position désignée par un groupe (14) d'au moins trois marqueurs de repère (16a-c), au moins une des informations de groupe suivantes : une description plus détaillée de la position ou de son environnement, un décalage du groupe (14) d'au moins trois marqueurs de repère (16a-c) par rapport à la position ainsi désignée, au moins une règle de navigation.

**10.** Procédé selon la revendication 9, dans lequel la règle de navigation comprend au moins une des instructions suivantes : une indication de direction, une indication de distance, une indication de vitesse, une invitation à prendre ou à déposer un objet, une invitation à recharger un accumulateur.

**11.** Procédé selon l'une des revendications 8 à 10, dans lequel au moins une information de groupe de la base de données (24) est modifiée dynamiquement, en particulier pour réagir à une tâche en cours, à des personnes ou à des véhicules dans l'environnement de navigation (18).

**12.** Système comprenant un véhicule autolocalisant (10) dans un environnement de navigation (18) et une pluralité de marqueurs de repère (16a-c) qui présentent chacun au moins trois caractéristiques de référence de positions connues à l'intérieur du marquer de repère, qui permettent de déterminer une pose à la manière d'un trépied et qui sont placés à une pluralité de positions dans l'environnement de navigation, le véhicule (10) comprenant un lecteur de code optique (12) conçu pour détecter les marqueurs de repère (16a-c) et pour lire le contenu de code de ceux-ci, ainsi qu'une unité de commande et d'évaluation (20) conçue pour effectuer une auto-localisation du véhicule (10), **caractérisé en ce que**

les marqueurs de repère (16a-c) sont placés en groupes (14) d'au moins trois marqueurs de repère (16a-c) respectifs, sachant qu'une plage de valeurs du contenu de code des marqueurs de repère (16a-c) est plus petite que le nombre de positions avec un marqueur de repère (16a-c) et que les contenus de code desdits au moins trois marqueurs de repère (16a-c) d'un groupe (14) désignent ensemble de manière univoque la position du groupe (14), et **en ce que** l'unité de commande et d'évaluation (20) est conçue pour regrouper en un code de combinaison les contenus de code desdits au moins trois marqueurs de repère (16a-c) d'un groupe, afin de déterminer leur position.

## Figur 1

## Figur 2

# Figur 3

# Figur 4

Figur 5

Figur 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2021311205 A1
- US 10223666 B1
- DE 102019202733 B4
- WO 2014170646 A1
- WO 22193749 A